Europäisches Patentamt

European Patent Office

Office européen des brevets

(11) Numéro de publication: **0 086 130**
**B1**

## (12) FASCICULE DE BREVET EUROPEEN

(45) Date de publication du fascicule du brevet: 18.05.88

(51) Int. Cl.⁴: **F 16 L 37/22**

(21) Numéro de dépôt: **83400158.8**

(22) Date de dépôt: **21.01.83**

(54) **Raccord rapide auto-obturateur double recul avec verrouillage.**

(30) Priorité: **27.01.82 FR 8201274**

(43) Date de publication de la demande:
**17.08.83 Bulletin 83/33**

(45) Mention de la délivrance du brevet:
**18.05.88 Bulletin 88/20**

(84) Etats contractants désignés:
**DE GB IT**

(56) Documents cités:
**US-A-2 599 935**
**US-A-3 073 342**
**US-A-4 098 292**

(73) Titulaire: **Gromelle, Raymond**
**4, rue du Révérend Père Favre**
**F-74708 Ville-la-Grand (FR)**

(72) Inventeur: **Gromelle, Raymond**
**4, rue du Révérend Père Favre**
**F-74708 Ville-la-Grand (FR)**

(74) Mandataire: **Kügele, Bernhard et al**
**c/o NOVAPAT-CABINET CHEREAU 5, Place du**
**Molard**
**CH-1204 Genève (CH)**

Courier Press, Leamington Spa, England.

EP 0 086 130 B1

## Description

La présente invention concerne les raccords ou coupleurs rapides auto-obturateurs, et, plus particulièrement, un raccord rapide auto-obturateur double recul avec verrouillage, notamment, quoique non exclusivement, pour systèmes de servitude hydraulique de tracteurs agricoles ou de travaux publics.

Les couplers ou raccords auto-obturateurs susceptibles d'être accouplés sous charge de fluide sous pression comprennent typiquement deux éléments de raccord incluant des moyens de clapet normalement sollicités vers leurs positions de fermeture par des ressorts, ces moyens de clapet coopérant par venue en contact des têtes de clapet pour reculer à l'encontre de la force de sollicitation de leur ressort afin de prendre une position d'équilibre intermédiaire et assurer le passage du fluide au travers du raccord.

Ce type de système se révèle satisfaisant pour des débits jusqu'à environ 40 litres par minute. Or, actuellement, la tendance, notamment dans les tracteurs agricoles, est d'utiliser des installations de servitude hydraulique avec des débits de l'ordre de 60 à 70 litres par minute et même davantage. Dans de telles conditions, les ressorts de rappel des moyens de clapet ne sont plus à même de s'opposer aux forces induites par le débit de fluide sur les têtes de clapet, ce qui peut entraîner ainsi la fermeture intempestive du clapet amont du raccord, avec les inconvénients graves afférents concernant les équipements entraînés par la pression hydraulique.

Le dispositif cité dans le brevet américain N° 4 098 292 présente un raccord auto-obturateur rapide dans lequel l'élément femelle comporte un système à double clapet 23, 59 associé à un dispositif de verrouillage 67, 68, 72a empêchant que le second clapet 55, 59 ne recule tant que le premier clapet 23 n'a pas reculé lui-même sous l'action du clapet de l'élément mâle 34a. Ce dispositif peut fonctionner uniquement lorsque le fluide s'écoule de l'élément femelle vers l'élément mâle. En effet, dans le cas où le fluide circulerait en sens inverse, le clapet obturerait le passage.

La présence invention a précisément pour objet de proposer un raccord rapide auto-obturateur obviant aux inconvénients ci-dessus mentionnés, de conception simple, fiable et efficace, et exploitant l'énergie liée au débit du fluide traversant le raccord accouplé pour verrouiller automatiquement l'équipage des deux clapets en butée l'un contre l'autre pour empêcher cet équipage de reculer au-delà d'une distance déterminée et donc, de fermer intempestivement le raccord.

Pour ce faire, selon une caractéristique de la présente invention, le raccord rapide comprend un élément mâle susceptible d'être inséré dans un élément femelle et d'être verrouillé dans celui-ci par un dispositif principal de verrouillage à billes et bague de coiffage de billes portée par l'élément femelle, chaque élément, mâle et femelle, comprenant un corps définissant un passage de fluide et, dans ce corps, un moyen de clapet coulissant sollicité vers une position de fermeture par un ressort, les moyens de clapet des deux éléments coopérant mutuellement, pour s'ouvrir lors de l'accouplement des éléments, l'élément femelle comprenant en outre un dispositif de verrouillage actionnable par le fluide traversant le raccord pour s'opposer à un recul d'ouverture du moyen de clapet associé au-delà d'une certaine distance déterminée une fois l'accouplement complet du raccord effectué.

Selon une autre caractéristique de l'invention, le dispositif de verrouillage du moyen de clapet femelle est disposé à l'intérieur de l'élément de clapet femelle et est du type à billes et à bague de coiffage de billes immergée dans la veine fluide de l'élément femelle et sollicitée par un ressort, la bague comprenant une collerette pour l'entraînement de la bague dans le fluide.

De telle façon la bague du dispositif de verrouillage interne de l'élément femelle se comporte comme un tiroir très facilement entraînable par le débit de fluide traversant le raccord accouplé pour verrouiller sélectivement l'équipage des clapets en butée l'un contre l'autre en empêchant ceux-ci de refermer l'accouplement, selon l'objet visé.

Les raccords rapides auto-obturateurs du type général évoqué ci-dessus, utilisables notamment dans les tracteurs agricoles, nécessitent pour l'accouplement de l'élément mâle, du fait du verrouillage par billes et bague coulissante de coiffage des billes, d'avoir l'arrière du raccord—en l'occurrence l'élément femelle solidaire du tracteur—susceptible d'être déplacé. Dans les tracteurs, les éléments femelles sont ainsi montés sur une plaque de distribution disposée à l'arrière du tracteur les différents éléments de raccordement de la plaque de distribution étant raccordés à des canalisations rigides provenent de la source de puissance hydraulique du tracteur par des canalisations flexibles permettant précisément à la partie arrière des raccords d'être légèrement déplacée.

La présente invention a pour autre objet de proposer un agencement du raccord rapide auto-obturateur obviant à cet inconvénient et permettant de supprimer la canalisation flexible, c'est-à-dire, le cas échéant, de monter directement l'extrémité arrière du raccord sur l'extrémité d'un tube rigide de fourniture de puissance hydraulique d'un tracteur.

Pour ce faire, selon une autre caractéristique particulière de l'invention, le corps de l'élément femelle formant cage pour les billes du dispositif principal de verrouillage du raccord est rendu solidaire, à son extrémité arrière, c'est-à-dire opposée à l'extrémité d'accouplement de l'élément mâle, d'un support cylindrique monté de façon à coulisser axialement dans une enveloppe externe étanche solidaire de la bague de coiffage de billes du dispositif principal de verrouillage du raccord et formant un moyen de raccordement de l'élément femelle à un élément de circuit de fluide sous pression.

De cette façon, puisque la partie arrière du raccord doit pouvoir être immobilisée, ce sont les organes intérieurs de l'élément femelle—y compris le dispositif de verrouillage de clapet femelle susmentionné—qui se déplacent axialement dans l'enveloppe rigide pour permettre l'accouplement ou le désaccouplement de l'élément mâle, sans nécessiter de déplacer l'enveloppe renfermant ces organes intérieurs.

Selon encore une autre caractéristique particulière de la présente invention, il est prévu un moyen de verrouillage actionnable par fluide—en l'espèce le fluide même traversant le raccord——pour verrouiller dans au moins une position relative le support coulissant du corps d'élément femelle par rapport à l'enveloppe externe.

Avec cet agencement, on réalise ainsi un verrouillage automatique hydraulique empêchant tout désaccouplement intempestif du raccord et n'autorisant donc le désaccouplement que lorsque la source de fourniture de fluide hydraulique de servitude aura été désactivée.

D'autres caractéristiques et avantages de la présente invention ressortiront de la description suivante de modes de réalisation, donnés à titre illustratif mais nullement limitatif, faite en relation avec les dessins annexés sur lesquels:

Les figures 1 et 2 représentent, suivant quatre demi-coupes longitudinales distinctes, différentes configurations d'accouplement d'un premier mode de réalisation d'un raccord rapide selon la présente invention; et

La figure 3 représente, en deux-demi coupes distinctes, correspondant à celles de la figure 1 mais inversées, d'un autre mode de réalisation de raccord selon l'invention.

Dans les dessins et la description qui va suivre, les éléments identiques ou analogues dans les différents modes de réalisation portent les mêmes chiffres de référence.

De façon générale, un coupleur rapide auto-obturateur selon la présente invention comprend un élément mâle 1 susceptible d'être inséré dans un élément femelle 2 et d'être verrouillé dans ce dernier, en configuration accouplée, par un système classique à billes de verrouillage 3 logées dans une cage de billes constitée par le corps 4 de l'élément femelle et commandées par une bague de coiffage 5 montée coulissante sur le corps 4 de l'élément femelle à l'encontre d'un ressort de rappel 6. Le corps 4 de l'élément femelle est susceptible d'être raccordé par une extrémité arrière d'adaptation 7 à une canalisation de fluide. Il en est de même pour le corps 8 de l'élément mâle 1. Chaque élément comprend, disposé dans le passage de fluide formé par le corps de l'élément, un clapet coulissant, à savoir un clapet mâle 9 et un clapet femelle 10, sollicités chacun vers la position de fermeture par un ressort 11 et 12, respectivement. Dans les modes de réalisation représentés, les clapets présentent des surfaces d'étanchéité périphériques 13 et 14, respectivement, coopérant normalement, en configuration de repos ou de fermeture, avec des butées tronconiques internes 15 et 16, respectivement, formées par les corps des éléments de raccord, les clapets représentés étant du type conique (générateur de bulles d'air emprisonné) mais pouvant également être plats (pour supprimer l'air emprisonné).

Conformément à la présente invention, la tête de clapet 17 du clapet 10 de l'élément femelle 2 est montée à l'extrémité d'une tige 18 coulissant dans un élément tubulaire central 19 monté dans le passage de fluide de l'élément femelle au moyen d'ailettes radiales 20. La tige 18 comprend, vers son extrémité arrière, dans la zone reçue dans l'alésage de l'élément tubulaire 19, une gorge 21. L'élément tubulaire 19 forme cage pour des billes de verrouillage 22 d'un dispositif de verrouillage interne, ces billes étant commandées, de façon en soi connue, par une bague de coiffage de billes 23 montée à coulissement sur la périphérie de l'élément tubulaire interne 19 et donc entièrement noyée dans la veine de fluide formée par le passage interne de l'élément femelle 2. La bague 23 est normalement sollicitée en butée contre un jonc d'arrêt 24 par un ressort 25 très faible prenant appui contre les ailettes 20.

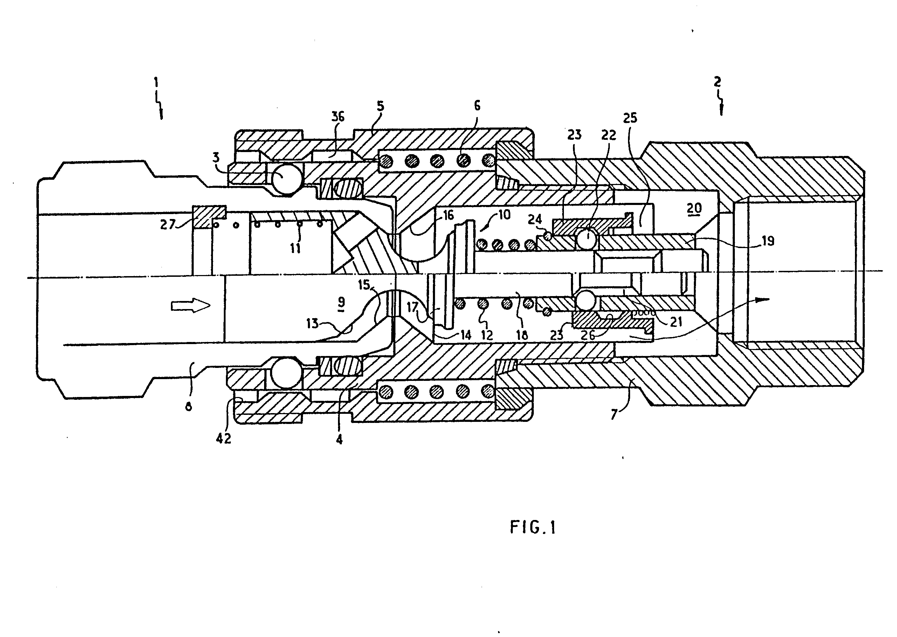

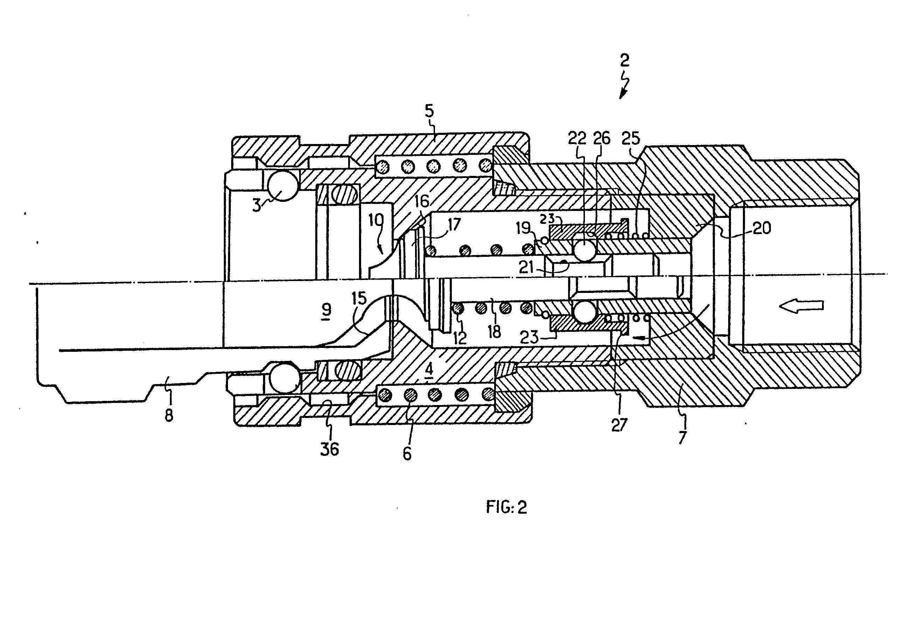

Le fonctionnement de ce raccord est le suivant. En position désaccouplée (demi-vue supérieure de la figure 2), la tête de clapet 17 porte normalement, en configuration de fermeture, contre le siège tronconique interne 16, l'élément femelle étant ainsi fermé. La bague-tiroir 23 est au repos, c'est-à-dire en butée vers l'avant contre le jonc 24 sous l'effet du ressort 25, les billes 22 reposant dans le creux de la gorge 21 de la tige 18 du clapet. Lorsqu'on veut accoupler l'élément mâle 1, connecté typiquement à une installation de servitude dont les canalisations sont maintenues sous une pression résiduelle élevée, par exemple de l'ordre de 50 bar, on met en oeuvre dans le raccord sa caractéristique particulière dite de "double recul" représentée sur la moitié supérieure de la figure 1. Dans cette configuration on réalise le plein accouplement du raccord alors que le clapet mâle 9 demeure fermé sous l'effet de la pression résiduelle aval, le clapet femelle 10 reculant alors du double de la distance normalement requise pour la configuration d'équilibre entre les deux clapets ouverts. Le clapet femelle 10, qui n'a dont pas encore de pression derrière lui, peut reculer sans problème car la bague-tiroir 23 demeurant au repos car aucun fluide ne circule dans l'élément femelle, les billes 22 quittant la gorge 21 pour gravir la partie épaisse de la tige en étant reçues dans la gorge 26 de la bague 23. A partir de cette configuration, on met alors normalement en marche la source de pression hydraulique côté élément femelle (tracteur), pour réaliser un écoulement de fluide vers l'élément mâle, comme représenté sur la demi-vue inférieure de la figure 2. Le clapet mâle 9 est alors repoussé, et les deux clapets 9 et 10 viennent occuper leur position d'équilibre ouvrant complètement le passage au travers du raccord. Dans ce sens, l'écoulement de fluide ne peut pas entraîner l'équipage des deux clapets, car, le clapet mâle n'étant pas du type à double recul si le débit est important, il vient tout de suite buter contre sa vie de retenue 27 en maintenant plein ouvert le passage dans le raccord. Dans cette configuration, la bague-tiroir 23 demeure dans sa position de repos (figure 2), l'écoulement de fluide ayant tendance à assister le ressort de rappel 25.

Le raccord selon la présente invention se caractérisé essentiellement dans le mode d'utilisation représenté sur la demi-vue inférieure de la figure 1, c'est-à-dire avec un sens de passage inverse du fluide depuis l'élément mâle vers l'élément femelle. C'est dans cette configuration que l'écoulement de fluide a tendance, comme mentionné au début de la description, à entraîner les clapets du fait de l'aptitude au double-recul du clapet femelle, ce contre quoi le ressort 12 ne saurait s'opposer pour des débits importants. Avec l'agencement selon l'invention, ce ressort 12 est taré pour résister à un débit normal de l'ordre de 40 litres par minute. Par contre, comme le ressort 25 est très faible, le tiroir 23 est tout de suite entraîné vers la droite (suivant l'orientation des figures) à l'encontre du ressort 25 pour venir en butée contre les ailettes 20, coiffant ainsi les billes de verrouillage 22 dans leur cage 19. Si le clapet 10 est amené à être entraîné dans le sens d'écoulement du fluide, son recul se trouve toutefois immédiatement bloqué par la rampe gauche de la gorge 21 de la tige 18, le clapet 10 étant alors verrouillé dans sa configuration normale d'ouverture simple recul quel que soit le débit traversant le raccord et quel que soit l'élément mâle accouplé. Pour rendre encore plus sensible la bague-tiroir 23 au débit de fluide on peut prévoir sur sa partie arrière une collerette s'étendant radialement vers l'extérieur, comme représenté en 27.

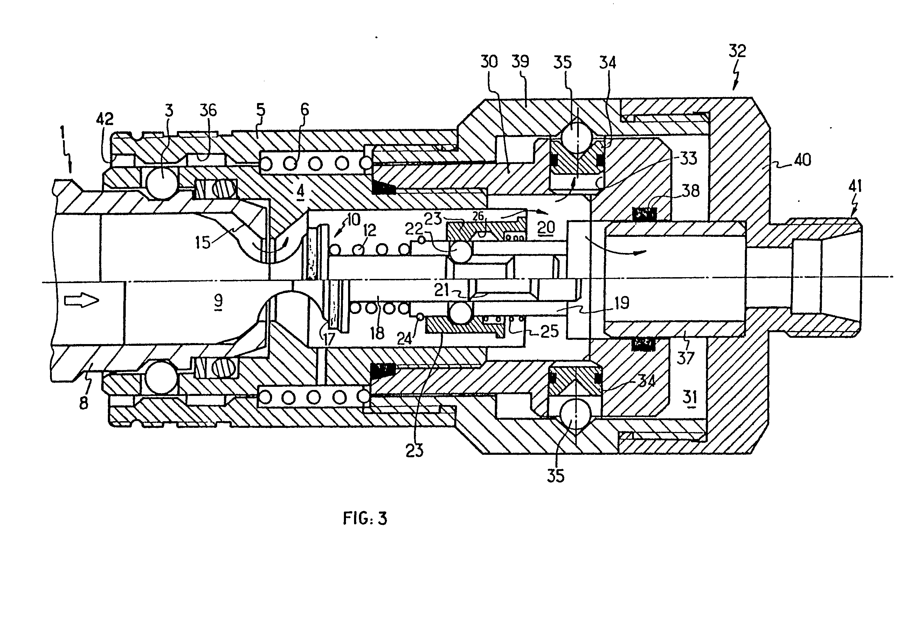

Cet agencement se retrouve à l'identique dans le mode de réalisation de la figure 3. Dans ce mode de réalisation, toutefois, on notera que le corps 4 de l'élément femelle est rendu solidaire par sa partie arrière, non pas d'un élément adaptateur 7, mais d'un support cylindrique 30 agencé pour coulisser à la façon d'un piston dans une chambre 31 formée par une enveloppe externe 32 rendue solidaire de la bague de verrouillage 5 du dispositif de verrouillage principal du raccord.

Dans la partie arrière du support coulissant 30, sont ménagées des chambres radiales 33 communiquant avec le passage longitudinal interne de fluide au travers de l'élément femelle et du support 30 et dans lesquelles sont montés des éléments de piston 34. Coopérant avec chaque élément de piston est prévue une bille de verrouillage 35 susceptible d'être reçue dans des cuvettes formées dans l'élément de piston 34 et dans la paroi interne de l'enveloppe 32, comme représenté. Avec cet agencement, on voit donc que c'est l'ensemble du corps 4 de l'élément femelle——formant cage pour les billes de verrouillage 3 du clapet femelle 10—du support 30 et des pistons de verrouillage 34 qui peut se déplacer axialement par rapport à l'ensemble extérieur constitué par la bague 5 et l'enveloppe 32 de façon à amener sélectivement les billes 3 en face de la gorge principale 36 ou de la demi-gorge extérieure 42 de la bague 5 du dispositifs de verrouillage principal du raccord. Quand un écoulement de fluide traverse le raccord ou que l'élément femelle est connecté à une source de pression, les éléments de piston 34 sont déplacés radialement vers l'extérieur, bloquant les billes 35 dans les cuvettes en regard, comme représenté sur la demi-vue supérieure de la figure 3, en empêchant ainsi tout déplacement relatif de l'élément femelle par rapport à son enveloppe extérieure et donc, notamment, tout désaccouplement intempestif du raccord.

Par contre, quand aucune surpression ne règne dans le passage du fluide à l'intérieur de l'équipage de l'élément femelle et de l'enveloppe 32, une traction ou une pression exercée sur le corps 4 par l'intermédiaire des billes 3 permet au support 30 de coulisser dans la chambre 31, les billes 35 gravissant des pentes des cuvettes de l'enveloppe en repoussant les éléments de piston 34 pour permettre la mise en place ou l'extraction de l'élément mâle 1.

Pour éviter la création d'une contre-pression dans la chambre intérieure 31, on prévoiera avantageusement un élément tubulaire central 37 s'étendant axialement vers l'intérieur de la chambre 31 à partir de la paroi arrière de l'enveloppe 32, le support 30 coulissant de façon étanche à la périphérie de cet élément tubulaire 37 par une partie cylindrique interne avantageusement pourvue d'un joint torique 38. Comme figuré par les flèches, l'écoulement de fluide passe ainsi directement depuis les intervalles entre les ailettes 20 jusqu'à la sortie de l'enveloppe 32 via l'alésage de l'élément tubulaire 37 sans pénétrer dans la chambre 31. Comme représenté, l'enveloppe 32 est avantageusement constituée d'un corps d'enveloppe 39 et d'un adapateur arrière 40 comportant des moyens de connexion 41 à une canalisation ou à un boîtier de distribution.

**Revendications**

1. Raccord rapide auto-obturateur double recul, comprenant un élément mâle (1) susceptible d'être inséré dans un élément femelle (2) et verrouillé dans celui-ci par un dispositif principal de verrouillage à billes (3) et bague de coiffage des billes (5) portée par l'élément femelle (2), chaque élément, mâle et femelle, comprenant un corps (4, 8) définissant un passage de fluide et, dans ce corps, un moyen de clapet coulissant (91 10) sollicité vers une position de fermeture par un ressort (12), les moyens de clapet des éléments du raccord coopérant mutuellement pour s'ouvrir lors de l'accouplement, caractérisé en ce que l'élément femelle (2) comprend un dispositif de verrouillage (22, 23, 25) qui est actionnable par le fluide traversant le raccord sous forme d'une assistance au ressort de rappel (25) ou sous forme d'un déplacement de la bague-tiroir (23) suivant que le fluide circule respectivement dans le sens raccord femelle (2) vers raccord mâle (1) ou dans le sens raccord mâle (1) vers raccord femelle (2) de façon que ledit dispositif de verrouillage s'oppose à un recul d'ouverture du moyen de clapet associé (10) au-delà d'une certaine distance déterminée.

2. Raccord selon la revendication 1, caractérisé en ce que la bague (23) du dispositif de verrouillage comprend une collerette (27) facilitant l'entraînement de la bague (23) par débit du fluide.

3. Raccord selon la revendication 1, caractérisé en ce que le corps (4) de l'élément femelle comprend un support cylindrique (30) monté de façon à coulisser axialement dans une enveloppe externe étanche (32) solidaire de la bague (5) de coiffage des billes (3) du dispositif principal de verrouillage du raccord et formant moyen de raccordement (41) de l'élément femelle à un élément de circuit de fluide sous pression.

4. Raccord selon la revendication 3, caractérisé en ce qu'il comprend, en outre, un moyen de verrouillage actionnable par fluide (34, 35) pour verrouiller dans au moins une position relative le support coulissant (30) par rapport à l'enveloppe externe (32).

5. Raccord selon la revendication 4, caractérisé en ce que le moyen de verrouillage comprend au moins un élément de piston (34) coulissant radialement dans le support coulissant (30) et ayant une face communiquant avec le passage de fluide dans l'élément femelle.

6. Raccord selon la revendication 5, caractérisé en ce qu'à l'élément de piston de verrouillage (34) est associée une bille (35), des cuvettes de réception de bille étant formées dans la paroi interne de l'enveloppe (32) et dans l'élément de piston de verrouillage (34), respectivement.

7. Raccord selon l'une des revendications 3 à 6, caractérisé en ce que le support (30) coulisse de façon étanche par une portée cylindrique interne (38) sur un élément de tube central (37) s'étendant vers l'intérieur de l'enveloppe (32) coaxialement au corps (4) de l'élément femelle.

**Patentansprüche**

1. Selbstdichtende Schnellkupplung mit Doppelrückholbewegung, bestehend aus einem Steckteil (1), das in ein Aufnahmeteil (2) einschiebbar und in diesem mittels einer Hauptverriegelungseinrichtung, die Kugeln (3) und einen am Aufnahmeteil (2) sitzenden Kugelaufnahmering (5) aufweist, verriegelbar ist, wobei das Steckteil und das Aufnahmeteil jeweils einen Körper (4, 8) haben, die einen Strömungsmittelkanal bilden, sowie ein verschiebbares Verschlußglied (9, 10), das durch eine Feder (12) in eine Schließstellung vorgespannt ist, wobei die Verschlußglieder der Kupplungselemente beim Ankuppeln zum Öffnen gegenseitig zusammenwirken, dadurch gekennzeichnet, daß das Aufnahmeteil (2) eine Verriegelungseinrichtung (22, 23, 25) aufweist, die durch das die Kupplung durchlaufende Strömungsmittel durch eine Unterstützung der Rückholfeder (25) oder durch eine Verstellung des Zugrings (23) je nach dem, ob das Strömungsmittel in Richtung vom Aufnahmeteil (2) zum Steckteil (1) oder in Richtung vom Steckteil (1) zum Aufnahmeteil (2) strömt, betätigbar ist, so daß die Verriegelungseinrichtung einer Öffnungsbewegung des Verschlußglieds (10) über eine vorbestimmte Strecke hinaus entgegenwirkt.

2. Kupplung nach Anspruch 1, dadurch gekennzeichnet, daß der Ring (23) der Verriegelungseinrichtung einen Band (27) aufweist, um den Antrieb des Rings (23) durch den Strömungsmitteldurchfluß zu erleichtern.

3. Kupplung nach Anspruch 1, dadurch gekennzeichnet, daß der Körper (4) des Aufnahmeteils einen zylindrischen Träger (30) aufweist, der in einem dichten Außengehäuse (32) axial verschiebbar gelagert ist, das mit dem Ring (5) zur Aufnahme der Kugeln (3) der Hauptverriegelungseinrichtung des Verschlusses verbunden ist und eine Einrichtung (41) zum Anschluß des Aufnahmeteils an ein Element eines Druckströmungsmittelkreises bildet.

4. Kupplung nach Anspruch 3, dadurch gekennzeichnet, daß sie weiterhin eine durch das Strömungsmittel betätigbare Verriegelungseinrichtung (34, 35) aufweist, um den verschiebbaren Träger bezüglich des Außengehäuses (32) in wenigstens einer relativen Stellung zu verriegeln.

5. Kupplung nach Anspruch 4, dadurch gekennzeichnet, daß die Verriegelungseinrichtung wenigstens ein im verschiebbaren Träger (30) radial gleitendes Kolbenelement (34) aufweist, das eine mit dem Strömungsmittelkanal im Aufnahmeteil in Verbindung stehende Fläche hat.

6. Kupplung nach Anspruch 5, dadurch gekennzeichnet, daß dem Verriegelungskolbenelement (34) eine Kugel (35) zugeordnet ist, und daß Kugelaufnahmeausnehmungen in der Innenwand des Gehäuses (32) bzw. dem Verriegelungskolbenelement (34) ausgebildet sind.

7. Kupplung nach einem der Ansprüche 3 bis 6, dadurch gekennzeichnet, daß der Träger (30) mittels einer inneren zylindrischen Fläche (38) auf einem zentralen Rohrelement (37) abdichtend gleitet, das sich in das Gehäuse (32) koaxial zum Körper (4) des Aufnahmeteils erstreckt.

**Claims**

1. A double-backward self-sealing quick union, including a male element (1) adapted to be inserted into a female element (2) and locked therein by a main locking device provided with balls (3) and a ball covering ring carried by said female element (2), each male and female element including a body (4, 8) which defines a fluid passage and, in said bodu, a sliding valve means (9, 10) biased to a closing position by a spring (12), valve means of said union elements mutually cooperating to be opened during the coupling action, characterized in that said female element (2) includes a locking device (22, 23, 25) which can be operated by the fluid when passing through said union as an aid to the return spring (25) or as a shifting of the slide-ring (23) according to whether said fluid flows respectively from the female union (2) to the male union (1) or from the male union (1) to the female union (2) in such a way that said locking device opposes said associated valve means (10) being submitted to an opening backward movement beyond a certain determined distance.

2. The union according to claim 1, characterized in that said locking device ring (23) includes a flange (27) for aiding said ring (23) to be driven through the fluid flow.

3. The union according to claim 1, characterized in that said female element body (4) includes a cylindrical bracket (30) which is provided in order to axially slide in a sealed external shell (32) integral with said ball (3) covering ring of the union main locking device and constituting a coupling means (41) to connect said female element to a pressure fluid circuit element.

4. The union according to claim 3, characterized in that it further includes a fluid operated locking means (34, 35) with a view to locking said sliding bracket (30) in at least a relative position with respect to said external shell (32).

5. The union according to claim 4, characterized in that said locking means includes at least a piston element (34) which radially slides in the sliding bracket (30) and having a front connected to the fluid passage in said female element.

6. The union according to claim 5, characterized in that to said locking piston element (34) is associated a ball (35), with ball receiving sockets being formed in the shell (32), internal wall and in said locking piston element (34) respectively.

7. The union according to any claim 3 to 6, characterized in that said bracket (30) sealingly slides through an internal cylindric bearing surface (38) on a central tube element (37) which extends inwardly said shell (32) in coaxial relation with said female element body (4).

FIG.1

FIG:2

FIG: 3

0 086 130